# EUROPÄISCHE PATENTANMELDUNG

(11) **EP 0 890 952 A1**
(43) Veröffentlichungstag der Anmeldung: **13.01.1999**
(21) Anmeldenummer: 98111836.7
(22) Anmeldetag: 26.06.1998
(51) Int. Cl.: G11B 33/04

(54) **Verpackung für scheibenförmige, optische Informationsträger**

(30) Priorität: 11.07.1997 DE 29712287 U
(71) Anmelder: SONOPRESS PRODUKTIONSGESELLSCHAFT FÜR TON- UND INFORMATIONSTRÄGER mbH, 33332 Gütersloh (DE)
(72) Erfinder: Meyer, Gerhard, 33378 Rheda-Wiedenbrück (DE); Opitz, Rudolf, 33332 Gütersloh (DE)

(57) **Zusammenfassung**

Die Erfindung betrifft eine Verpackung für mindestens einen scheibenförmigen, optischen Informationsträger (15) mit einem aufklappbaren Deckelelement (2), einem Bodenelement (1) und mindestens einem zwischen dem Deckel- und dem Bodenelement angeordneten Trageelement zur lösbaren Fixierung des Informationsträgers (15) in der Verpackung. Um das Interesse des Verkehrs in erhöhtem Maße zu wecken, wird vorgeschlagen, daß in der Verpackung ein mit mindestens einem Auslöser (9) und mindestens einem Signalgeber (8) verbundener, elektronischer Baustein (7) und eine Energiequelle (10) angeordnet sind.

## Beschreibung

Die Erfindung betrifft eine Verpackung für scheibenförmige, optische Informationsträger.

Eine Verpackung für jeweils einen scheibenförmigen, optischen Informationsträger, gewöhnlich eine CD, ist aus der DE 3 425 579 C1 bekannt. Diese Verpackung, die Jewelbox genannt wird, umfaßt ein aufklappbares, transparentes Deckelelement, ein transparentes Bodenelement und ein zwischen Deckel- und Bodenelement angeordnetes Trageelement zur lösbaren Fixierung des Informationsträgers in der Verpackung. Häufig sind am Deckelelement innenseitig ein Booklet und zwischen dem Boden- und dem Trageelement eine Inlaycard angeordnet. Booklet und Inlaycard haben einen informierenden Charakter, dienen aber wegen der transparenten Ausführung von Boden- und Deckelelement auch als Blickfang für den Verkehr.

Eine Mehrfachverpackung für bis zu vier scheibenförmige, optische Informationsträger ist aus der DE 3 301 644 A1 bekannt. Sie besteht im wesentlichen aus einem aufklappbaren Deckelteil, einem aufklappbaren Bodenelement und einem zwischen diesen angeordneten Trageelement.

Bisherige Verpackungen für scheibenförmige, optische Informationsträger vermögen die Aufmerksamkeit nur für eine kurze Zeit auf sich zu lenken.

Der Erfindung liegt die Aufgabe zugrunde, eine Verpackung für scheibenförmige, optische Informationsträger zu schaffen, die das Interesse des Verkehrs in erhöhtem Maße weckt.

Die Aufgabe ist dadurch gelöst, daß eine Verpackung für mindestens einen scheibenförmigen, optischen Informationsträger mit einem aufklappbaren Deckelelement, einem Bodenelement und mindestens einem zwischen Deckel- und Bodenelement angeordneten Trageelement zur lösbaren Fixierung des Informationsträgers in der Verpackung geschaffen wird, in der ein mit mindestens einem Auslöser und mindestens einem Signalgeber verbundener, elektronischer Baustein und eine Energiequelle angeordnet sind (Anspruch 1).

Ist durch den Aufbau und die Anordnung von Deckel-, Boden- und Trageelement mindestens ein Hohlraum definiert, sind der Auslöser (9, 24, 51, 56, 63, 74), der Signalgeber (8, 53, 57, 58), der elektronische Baustein (7, 54, 71) und die Energiequelle (10, 52, 55, 72) in dem Hohlraum angeordnet (Anspruch 2).

Bevorzugt ist die erfindungsgemäße Verpackung in Form einer Jewelbox ausgebildet (Anspruch 3).

Nach der Erfindung werden auf einfache Art und Weise handelsübliche elektronische Bauteile in der Verpackung integriert. Man nützt hierfür die bei vielen Verpackungstypen auftretenden Hohlräume. Die elektronischen Bauteile sind z.B. Integrierte Schaltkreise, Kondensatoren, Widerstände, Dioden, usw.

Als Energiequellen dienen im allgemeinen Batterien, die entsprechend dem begrenzten Raumangebot in der Verpackung wie z.B. Knopfzellen oder Micro-Batterien hinreichend klein sein müssen. Denkbar ist auch eine externe Stromversorgung, die über eine Steckverbindung mit dem elektronischen Baustein verbunden ist.

Das Zusammenwirken von Auslöser, elektronischem Baustein und Signalgeber dient als zusätzliches Mittel, das Produkt, d.h. den scheibenförmigen, optischen Informationsträger, von ähnlichen Produkten abzuheben.

Dem Verbraucher können so zusätzliche Informationen über den Inhalt der auf dem Informationsträger gespeicherten Informationen vermittelt werden oder aber die Verpackung nach der Erfindung dient als bloßer zusätzlicher Kaufanreiz.

Die Erfindung läßt sich bei allen handelsüblichen Verpackungen für scheibenförmige, optische Informationsträger integrieren. Hier sind als Beispiel die mit den Handelsbezeichnungen 3 Pac, Nature Pac, Single Pac, Digipac, Brillant Box, Duobox, Multibox oder Amaray Box zu nennen.

Der elektronische Baustein kann im Booklet der Jewelbox angeordnet sein (Anspruch 4).

Der Auslöser kann ein Taster (Anspruch 5), der bevorzugt in einer Bohrung angeordnet ist (Anspruch 6), ein Zeitgeber (Anspruch 7), ein Schaltkontakt (Anspruch 8), der gegebenenfalls beim Öffnen des Deckelelements schließt (Anspruch 9), ein akustoelektrischen Wandler (Anspruch 10) oder eine Photozelle (Anspruch 11) sein.

Der Signalgeber ist beispielsweise ein elektroakustischer Wandler (Anspruch 12).

Hat das Trageelement zur lösbaren Fixierung des Informationsträgers eine zentrale, durchbrochene Rastvorrichtung, so ist der elektroakustische Wandler bevorzugt, bezogen auf den Informationsträger, hinter der Rastvorrichtung angeordnet (Anspruch 13).

Der Signalgeber kann mindestens eine Leuchtdiode umfassen (Anspruch 14).

Die Leuchtdiode ist bevorzugt in einer mit einer Bohrung des Informationsträgers fluchtenden Bohrung des Trageelements angeordnet.

Ausführungsbeispiele nach der Erfindung werden nachfolgend anhand der Zeichnung beschrieben. Es zeigt
- Fig. 1: eine Ausführungsform einer Jewelbox mit integrierter Platine in Explosionsdarstellung;
- Fig. 2: eine andere Ausführungsform einer Jewelbox mit im Booklet integrierter Platine;
- Fig. 3: die Platine aus Fig. 2 von unten;
- Fig. 4: eine aufgeklappte Mehrfachverpackung mit Schaltelementen, Leuchtdioden und elektroakustischem Wandler;
- Fig. 5: die aufgeklappte Mehrfachverpackung aus Fig. 4 von unten;
- Fig. 6: eine aufgeklappte Mehrfachverpackung mit Zeitgeber und elektroakustischem Wandler;
- Fig. 7: die aufgeklappte Mehrfachverpackung aus Fig.6 von unten;

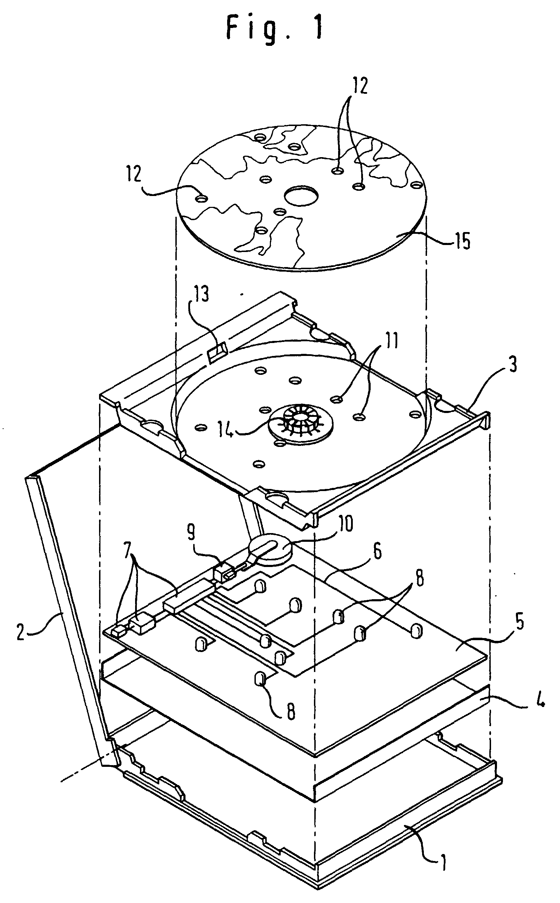

In Fig. 1 ist eine Jewelbox schematisch dargestellt, die wie üblich ein Bodenelement 1, ein aufklappbares Deckelelement 2 und ein zwischen diesen angeordnetes Trageelement 3 (Tray), an dem mittels einer zentralen, durchbrochenen Rastvorrichtung 14 eine CD 15 lösbar fixiert ist. Zwischen dem Tray 3 und dem Bodenelement 1 liegen eine Inlaycard 4 und eine erfindungsgemäße Platine 5. Auf dieser Platine 5 sind neben Leiterbahnen 6 und elektronischen Bausteinen 7 Leuchtdioden 8 und ein Taster 9, mit dem die Leutdioden in Betriebszustand versetzt werden können, angeordnet. Die Stromversorgung übernimmt eine Batterie 10. Sowohl das Tray 3 als auch die CD 15 sind mit Bohrungen 11 bzw. 12 versehen, die jeweils mit einer zugeordneten Leuchtdiode 8 fluchten. Zudem ist in das Tray 3 eine Aussparung 13 eingebracht, die von dem Taster 9 durchgriffen wird, so daß der Benutzer die Leuchtdioden problemlos aktivieren kann. Zusätzlich kann hinter der Rastvorrichtung 14 ein Piezolautsprecher angeordnet sein (nicht dargestellt), der problemlos auf der Platine 5 integrierbar ist.

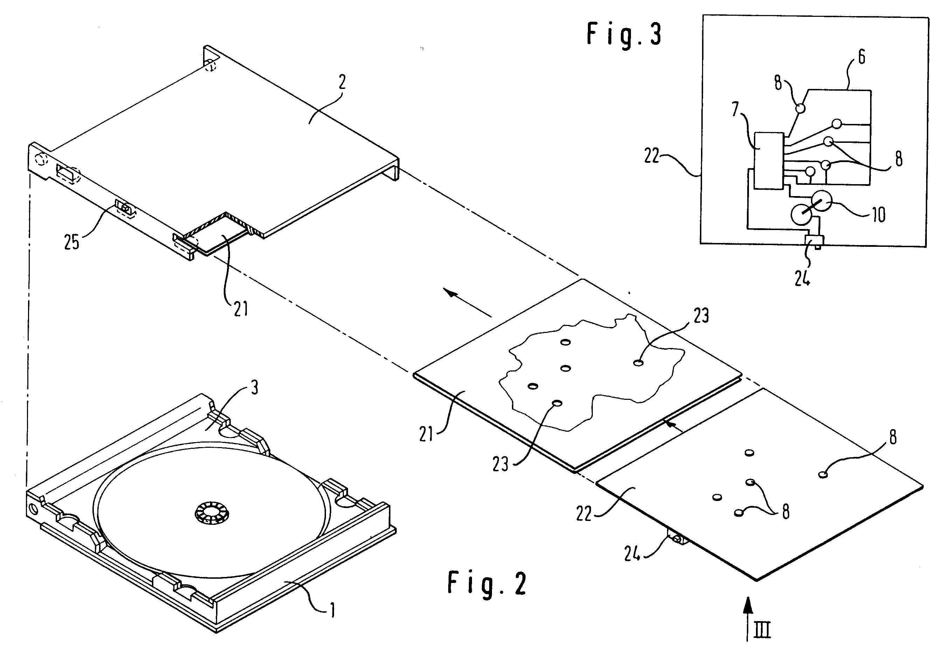

Fig. 2 zeigt schematisch eine aus einem Bodenelement 1, einem Tray 3 und einem Deckelelement 2 aufgebaute Jewelbox mit Booklet 21 und darin integrierter Platine 22. Auf der Platine sind vorderseitig Leuchtdioden 8 angeordnet. Diese Fluchten mit einem jeweils zugeordneten Loch 23 im Booklet. Auf der Platine ist seitlich ein Schlalter 24 angeordnet, der eine Aussparung 25 einer Seitenwand des Deckelelements 2 durchgreift, so daß der Benutzer die Leuchtdioden 8 von außen aktivieren kann. Fig. 3 zeigt die in das Booklet 21 integrierte Platine 22 von hinten, auf der ein elektronischer Baustein 7, Leiterbahnen 6, Batterien 10, die Leuchtdioden 8 und der Schalter 24 angeordnet sind.

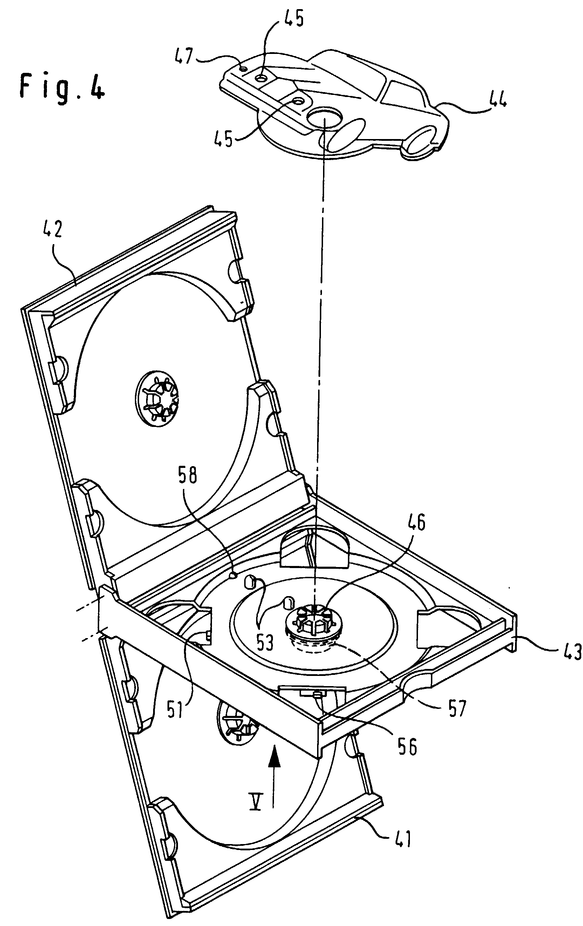

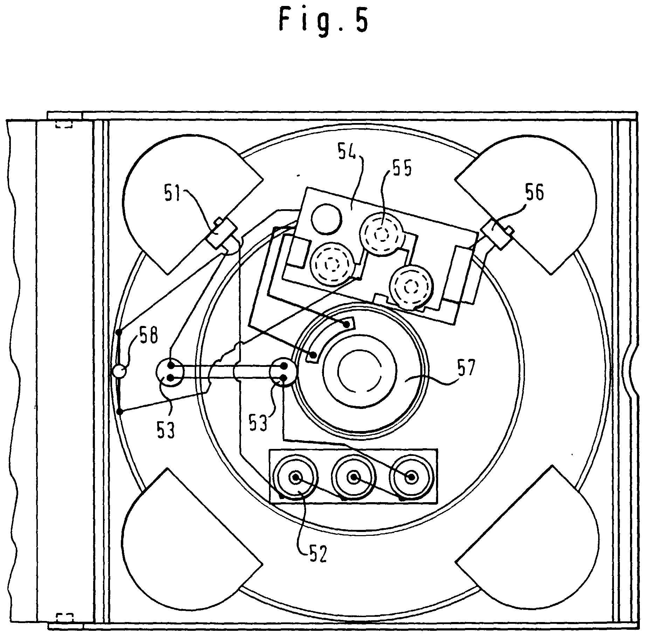

In Fig. 4 und Fig. 5 ist eine erfindungsgemäße Mehrfachverpackung mit einem aufklappbaren Bodenelement 41, einem aufklappbaren Deckelelement 42 und einem zwischen diese angeordneten Trageelement 43 schematisch dargestellt. Zwei Schaltkreise sind an der Unterseite des Trageelements 43 angeordnet. Der erste Schaltkreis umfaßt zwei Leuchtdioden 53, einen Schalter 51 zur Aktivierung der Leuchtdioden 53 und drei Batterien 52 als Energiequelle. Die Leuchtdioden 53 durchgreifen Bohrungen des Trageelements 43 und mit diesen Bohrungen fluchtende Bohrungen einer mittels einer zentralen, durchbrochenen Rastvorrichtung 46 an dem Trageelement 43 lösbar fixierten Cut-CD 44. Der zweite Schaltkreis umfaßt eine Schaltplatine 54, auf der auch Batterien 55 angeordnet sind. Der zweite Schaltkreis kann mit einem Schalter 56 aktiviert werden. Die Schaltplatine 54 ist mit einem unter der zentralen, durchbrochenen Rastvorrichtung 46 des Trageelements 43 angeordneten Piezolautsprecher 57 und einer weiteren Leuchtdiode 58, die wiederum eine Bohrung des Trageelements 43 und eine mit dieser Bohrung fluchtenden Bohrung 47 der Cut-CD 44 durchgreift. Bei Betätigung des Schalters 56 leuchten die Leuchtdioden 58 und ertönt mittels des Piezolautsprechers 57 ein akustisches Signal, wie z.B. das Hupen eines Autos oder eine Melodie.

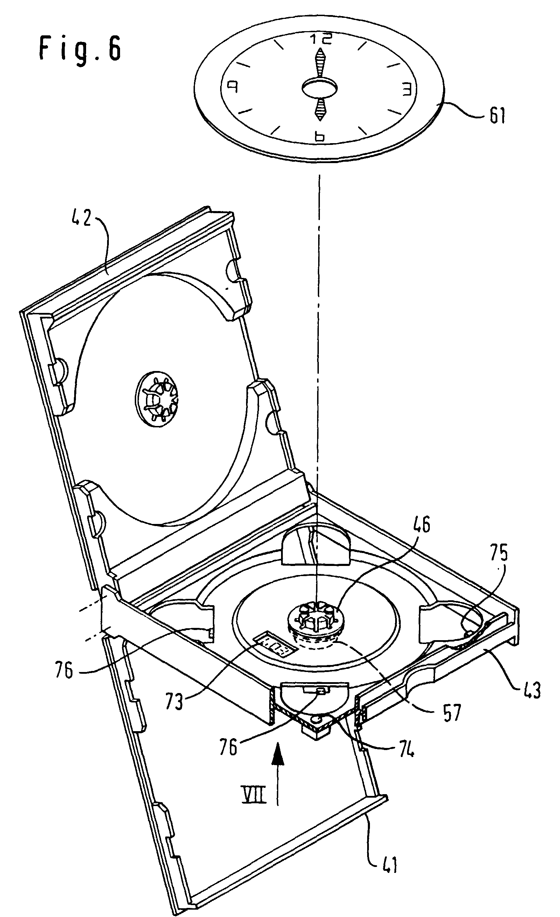

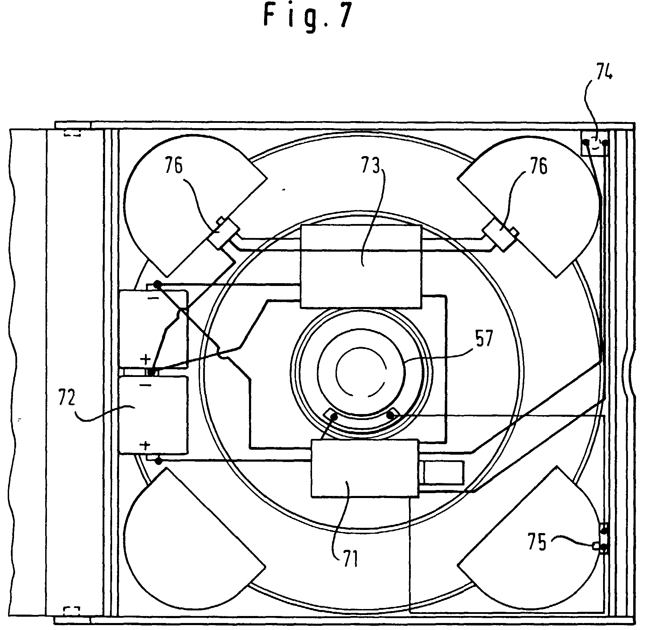

In Fig. 6 und Fig. 7 ist eine weitere Ausführungsform einer Mehrfachverpackung nach der Erfindung schematisch dargestellt. Eine CD 61 ist mittels einer zentralen, durchbrochenen Rastvorrichtung 46 an dem Tragelement 43 lösbar fixiert. An der Unterseite des Trageelements 43 ist eine Schaltplatine 71 angeordnet. Diese ist mit einem Piezolautsprecher 57 verbunden. Als Energiequelle dienen Batterien 72. Ein Zeitgeber 73, dessen Anzeigefeld durch ein in das Tragelement eingebrachtes Fenster 63 sichtbar ist, löst ein akustisches Signal, z.B. ein Glockenläuten, zu einem vom Benutzer vorbestimmten Zeitpunkt aus. Alternativ kann ein akustisches Signal auch mit einem Taster 74, der eine Bohrung des Trageelements durchgreift, ausgelöst werden. Die Signalabgabe kann mit einem Schalter 75 deaktiviert werden. Der Zeitgeber 73 wird mit den Schaltern 76 eingestellt.

## Patentansprüche

1. Verpackung für mindestens einen scheibenförmigen, optischen Informationsträger (15, 44, 61) mit einem aufklappbaren Deckelelement (2, 42), einem Bodenelement (1, 41) und mindestens einem zwischen dem Deckel- und dem Bodenelement angeordneten Trageelement zur lösbaren Fixierung des Informationsträgers (15, 44, 61) in der Verpackung, **dadurch gekennzeichnet**, daß in der Verpackung ein mit mindestens einem Auslöser (9, 24, 51, 56, 63, 74) und mindestens einem Signalgeber (8, 53, 57, 58) verbundener, elektronischer Baustein (7, 54, 71) und eine Energiequelle (10, 52, 55, 72) angeordnet sind.

2. Verpackung nach Anspruch 1, mit mindestens einem durch den Aufbau und die Anordnung von Deckel-, Boden- und Trageelement definierten Hohlraum, dadurch gekennzeichnet, daß der Auslöser (9, 24, 51, 56, 63, 74), der Signalgeber (8, 53, 57, 58), der elektronische Baustein (7, 54, 71) und die Energiequelle (10, 52, 55, 72) in dem Hohlraum angeordnet sind.

3. Verpackung nach Anspruch 2, in Form einer Jewelbox.

4. Verpackung nach Anspruch 3, mit Booklet (21), dadurch gekennzeichnet, daß der elektronische Baustein (7) im Booklet (21) angeordnet ist.

5. Verpackung nach einem der Ansprüche 1 bis 4, dadurch gekennzeichnet, daß der Auslöser ein Taster (13, 74) ist.

6. Verpackung nach Anspruch 5, dadurch gekennzeichnet, daß der Taster (74) in einer Bohrung angeordnet ist.

7. Verpackung nach einem der Ansprüche 1 bis 6, dadurch gekennzeichnet, daß der Auslöser ein Zeitgeber (73) ist.

8. Verpackung nach einem der Ansprüche 1 bis 7, dadurch gekennzeichnet, daß der Auslöser ein Schaltkontakt (51, 56) ist.

9. Verpackung nach Anspruch 8, dadurch gekennzeichnet, daß der Schaltkontakt beim Öffnen des Deckelelements schließt.

10. Verpackung nach einem der Ansprüche 1 bis 9, dadurch gekennzeichnet, daß der Auslöser ein akustoelektrischer Wandler ist.

11. Verpackung nach einem der Ansprüche 1 bis 10, dadurch gekennzeichnet, daß der Auslöser eine Photozelle ist.

12. Verpackung nach einem der Ansprüche 1 bis 11, dadurch gekennzeichnet, daß der Signalgeber ein elektroakustischer Wandler (57) ist.

13. Verpackung nach Anspruch 12, bei der die Trageelement (3, 43) zur lösbaren Fixierung des Informationsträgers (15, 44, 61) eine zentrale, durchbrochene Rastvorrichtung (14, 46) hat, dadurch gekennzeichnet, daß der elektroakustische Wandler (57), bezogen auf den Informationsträger (15, 44, 61), hinter der Rastvorrichtung (14, 46) angeordnet ist.

14. Verpackung nach einem der Ansprüche 1 bis 13, dadurch gekennzeichnet, daß der Signalgeber mindestens eine Leuchtdiode (8, 53, 58) umfaßt.

15. Verpackung nach Anspruch 14, dadurch gekennzeichnet, daß die Leuchtdiode (8, 53, 58) in einer mit einer Bohrung (12, 45, 47) des Informationsträgers (15, 44, 61) fluchtenden Bohrung (11) des Trageelements (3, 43) angeordnet ist.
